# EUROPÄISCHE PATENTSCHRIFT

(11) **EP 0 377 227 B1**
(45) Veröffentlichungstag und Bekanntmachung des Hinweises auf die Patenterteilung: **01.05.1996**
(21) Anmeldenummer: 89124181.2
(22) Anmeldetag: 30.12.1989
(51) Int. Cl.: B29C 53/60, F16L 9/16

(54) **Wickelvorrichtung für Rohre**
Winding device for tubes
Dispositif d'enroulement pour la fabrication de tubes

(30) Priorität: 05.01.1989 CH 33/89
(43) Veröffentlichungstag der Anmeldung: 11.07.1990
(73) Patentinhaber: AMETEX AG, CH-8867 Niederurnen (CH); REDCO N.V., B-1880 Kapelle op den Bos (BE); SOCIETE ETEX, F-75008 Paris (FR); ERSAG Systeme AG, CH-8706 Meilen (CH)
(72) Erfinder: Shaw, Keith James, CH-8804 Pfäffikon (CH); Caluori, André, CH-7013 Domat-Ems (CH); Heer, Hansjörg, CH-8856 Tuggen (CH)
(74) Vertreter: Scheidegger, Werner & Co.

(56) Entgegenhaltungen:
- EP-A- 0 288 797
- WO-A-83/04196
- WO-A-89/05723
- DE-B- 1 296 787
- US-A- 3 297 802

## Beschreibung

Die vorliegende Erfindung betrifft eine Vorrichtung zur Bildung von Rohren durch schraubenlinienförmiges Wickeln eines Bandes, mit einem stationären zylindrischen Wickelkäfig aus einer Mehrzahl zwischen zwei parallelen ringförmigen Trägerplatten angeordneten, den zylindrischen Mantel des Käfigs bildenden stangenförmigen Elementen, von denen wenigstens ein Teil um ihre jeweilige Längsachse drehend angetrieben sind, um ein mittels einer Führungseinrichtung auf die Käfiginnenseite geführtes Band auf dem gewünschten Durchmesser abzustützen und in Wickelrichtung vorzutreiben und die aneinanderstossenden Bandränder zusammenzufügen, wobei die angetriebenen Käfigstangen um den Steigungswinkel des schraubenlinienförmig aufzuwickelnden Bandes zwischen den ringförmigen Trägerplatten schräggestellt angeordnet sind, und Mittel vorgesehen sind, um das zu wickelnde Band senkrecht zur Längsachse der angetriebenen Käfigstangen an letztere anzulegen.

Eine Wickelvorrichtung der vorstehend beschriebenen Art ist aus WO-A-83 04 196 bekannt, bei deren Wickelkäfig insbesondere die den zylindrischen Käfigmantel bildenden Stäbe angetrieben sein können und ggf. um den Steigungswinkel des schraubenlinienförmig aufzuwickelnden Bandes zwischen ringförmigen Trägerplatten schrägstellbar sind (durch gegenseitiges Verdrehen der Trägerplatten zueinander).

Diese theoretisch ins Auge gefasste Lösung ist aus konstruktiver Sicht derart aufwendig, dass eine praktische Realisierbarkeit mehr als fraglich ist. Zudem wäre bei dieser Lösung ein zusätzlicher angetriebener Bandzuführmechanismus unerlässlich.

Aufgabe der vorliegenden Erfindung ist somit die Schaffung einer verbesserten Wickelvorrichtung, bei welcher trotz einfachen und stabilen Aufbaus des Käfigs die Reibungskräfte zwischen den angetriebenen Käfigstangen und dem zu wickelnden Band optimal ausgenützt werden, so dass in der Regel auf einen zusätzlichen Bandzuführmechanismus verzichtet werden kann.

Dies wird bei einer Wickelvorrichtung der eingangs definierten Art durch die Merkmale des Kennzeichens von Anspruch 1 erreicht.

Der einfache Aufbau des Wickelkäfigs wird dadurch erreicht, dass die geraden Stäbe zusammen mit den ringförmigen Trägerplatten einen absolut stabilen Käfig bilden, während die abwechselnd dazu schrägstehend angeordneten Rollen angetrieben sind und das Wickeln des Bandes sowie den Vorschub des gebildeten Rohres gewährleisten.
einrichtung, beim Abrollen des Bandes etc. vorgesehen sein kann.

Um das Band tangential auf die Käfiginnenseite und senkrecht zur Längsachse der schräggestellten Käfigstangen einzuführen, ist vorzugsweise eine Führungseinrichtung vorgesehen, welche um einen einstellbaren Winkel verschwenkbar am Gestell der Vorrichtung angeordnet ist.

Zum Zusammenfügen der aneinanderstossenden Bandränder (grundsätzlich eine Nut- und Kamm-Verbindung) ist vorzugsweise eine Bandverschluss-Rolle vorgesehen, welche ins Käfiginnere ragt und sich im Bereich der Bandverschlussstelle von der Innenseite her gegen das Band anlegt, gegebenenfalls unter Verwendung einer Verschluss-Gegenrolle (welche durch einen der Käfigstäbe gebildet sein kann).

Die Länge des Käfigs beträgt normalerweise das Mehrfache einer Bandbreite, so dass eine optimale Kalibrierung des Rohres unter allen Betriebsbedingungen gewährleistet ist.

Wegen dieser Käfiglänge mag es besonders vorteilhaft sein, den angetriebenen Käfigstäben, im Längsschnitt gesehen, nicht eine zylindrische, sondern eine konkave Form zu geben. Damit wird die durch die Schrägstellung der angetriebenen Käfigstäbe erzeugte Abweichung der Hüllfläche (bei parallel zur Käfigachse verlaufenden Stäben ein Zylinder) korrigiert. Für übliche Anwendungsfälle können aber auch zylindrische Käfigstangen ausreichen und die optimale Uebertragung der Reibungs- bzw. Antriebskräfte gewährleisten.

Die Käfigstäbe sind normalerweise aus Stahl. Die Oberflächen der Stäbe können dabei glatt oder aufgerauht (gerippt) ausgebildet sein, oder gegebenenfalls aus einem Ueberzug aus Kunststoff (z.B. Elastomeren) bestehen.

Durch die Schrägstellung der angetriebenen Käfigstäbe wird eine optimale Wicklung der Rohre und deren Vortrieb erreicht. Allerdings bedingt die erfindungsgemässe Konstruktion einen gewissen Aufwand beim Antrieb der Käfigstäbe (Gelenkverbindung zwischen den normalen Antriebswellen und den schräggestellten Stäben oder individuelle Hydraulikmotoren) sowie deren Lagerung. Wie Versuche gezeigt haben, lohnt sich jedoch dieser Aufwand.

Die Erfindung wird nachstehend anhand eines in der Zeichnung dargestellten Ausführungsbeispiels noch etwas näher erläutert. Es zeigt:
Fig. 1 eine perspektivische Ansicht, rein schematisch, einer Vorrichtung nach der Erfindung; und
Fig. 2 eine ebenfalls perspektivische Darstellung von Teilen der Vorrichtung nach Fig. 1 (die übrigen Teile wurden aus Gründen der besseren Uebersicht weggelassen).

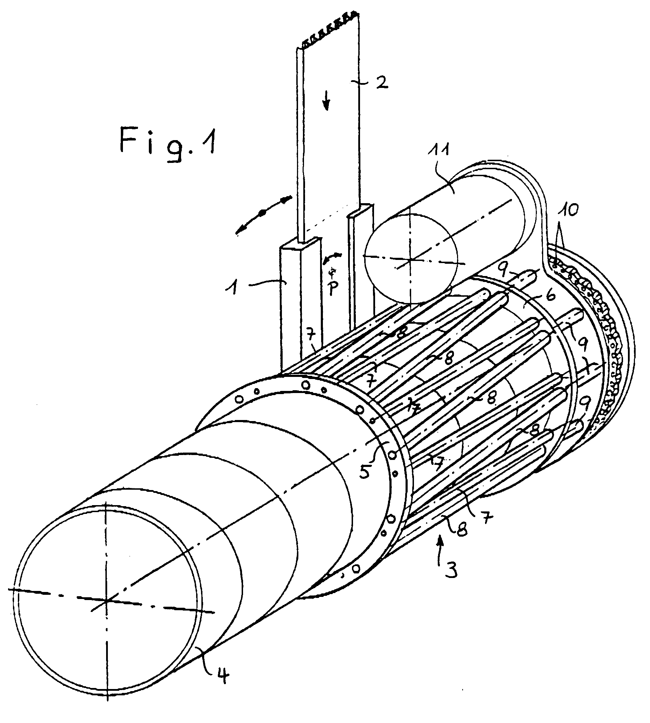

Fig. 1 der Zeichnung zeigt rein schematisch den grundsätzlichen Aufbau einer Wickelvorrichtung nach der Erfindung. Diese Vorrichtung umfasst in einem Montagegestell (nicht dargestellt) eine Führungseinrichtung 1, durch welche ein Kunststoffband oder -profil 2 unter einem einstellbaren Winkel tangential in den eigentlichen Wickelkäfig 3 eingeführt wird. Die Einrichtung 1 ist am Gestell montiert und an diesem um den gewünschten Winkel verschwenkbar angeordnet. Der einzustellende Winkel entspricht dem Steigungswinkel des schraubenlinienförmig aufzuwickelnden Profils 2, welcher seinerseits von der Breite des Profils und vom Durchmesser des zu bildenden Rohres 4 abhängt.

Mit der gezeigten Vorrichtung kann somit ein Profil vorbestimmter Breite zu einem Rohr mit vorbestimmtem Durchmesser gewickelt werden. Bei Aenderung der Profilbreite ist die Führungseinrichtung 1 gegen eine solche passender Breite auszuwechseln und der Anstellwinkel der Einrichtung 1 zur Längsachse des Käfigs 3 neu einzustellen. Für andere Rohrdurchmesser ist der ganze Käfig 3 durch einen Käfig mit dem gewünschten Durchmesser auszuwechseln und die Führungseinrichtung 1 passend einzustellen.

Der Wickelkäfig 3 weist ein Grundgestell aus zwei parallelen ringförmigen Trägerplatten 5 und 6 auf, welche durch fixe Stangen 7 im Abstand gehalten sind. Die Stangen 7 gewährleisten eine aureichende Steifigkeit des feststehenden, im übrigen am nicht dargestellten Montagegestell befestigten Käfigs 3.

Jeweils zwischen zwei fixen Käfigstangen 7 ist eine um den Steigungswinkel des schraubenlinienförmig aufzuwickelnden Profils 2 schräggestellte, zwischen den Ringen 5 und 6 antreibbar angeordnete Stange 8 vorgesehen. Die Stangen 8 sind in speziellen Schräglagern in den beiden Ringen 5,6 gelagert und werden mittels Antriebswellen 9 und zwischengeschaltete Wellengelenke (nicht dargestellt) angetrieben.

Der Antriebsmechanismus 10 (Kettenantrieb) ist auf dem rückwärtigen Teil des Käfigs 3 montiert und umfasst z.B. einen Kettenantrieb, welcher seinerseits von einem passenden Hydraulikmotor 11 angetrieben wird.

Die angetriebenen Käfigstangen 8 sind an ihren Enden in den Ringen 5,6 jeweils auf einem gleichen Durchmesser bezüglich der Käfigachse gelagert. Ihre Schrägstellung ist für einen bestimmten Käfigdurchmesser (Rohrdurchmesser) auf eine vorbestimmte Profilbreite eingestellt, so dass nach einem Bandumgang das Zusammenfügen von zwei aneinanderstossenden Profilrändern erfolgt (die Profilränder sind in bekannter Weise ausgebildet, d.h. sie ermöglichen ein Zusammenfügen mittels Nut und Kamm).

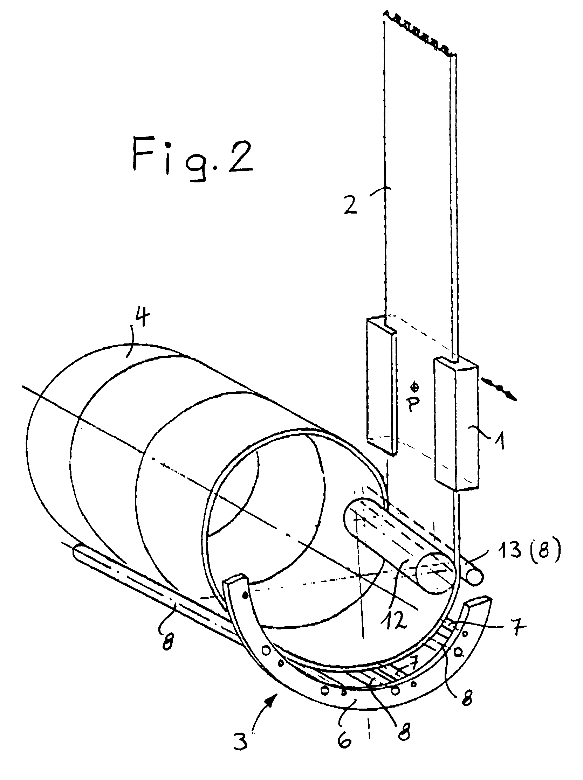

Um das Zusammenfügen zu erleichtern, ist vorzugsweise eine Bandverschluss-Rolle 12 vorgesehen, welche vom rückwärtigen Ende her in den Käfig 3 hineinragt, wie Fig. 2 zeigt. Die Rolle 12 ragt um einen solchen Betrag in den Käfig 3 hinein, dass sie sich im Bereich der Verschlussstelle von innen her gegen das Band anlegt und dieses mit dem Rand des zugeführten Profils zusammenfügt. Wie gezeigt ist vorzugsweise auf der Aussenseite hinter der Verschlussrolle 12 eine Verschluss-Gegenrolle 13 vorgesehen. Diese Gegenrolle 13 sollte drehbar ausgeführt sein. Sie kann z.B. von einem der schräggestellten Käfigstäbe 8 gebildet sein oder aus einer zusätzlichen, mit der Rolle 12 ein z.B. an der Führungseinrichtung 1 montiertes Rollenpaar mit Klemmspalt bildenden Rolle bestehen. Vorzugsweise ist wenigstens eine der Rollen 12 oder 13 ebenfalls angetrieben.

Aus Fig. 2 geht auch hervor, wie die Führungseinrichtung 1 z.B. um den Punkt P verschwenkbar ist, um dem Profil 2 bezüglich der Käfiglängsache eine solche Schrägstellung zu verleihen, dass das Profil 2 im rechten Winkel auf die angetriebenen Käfigstäbe 8 auftrifft.

In der Schrägstellung dieser Käfigstäbe 8 und deren Antrieb in Vorschubrichtung des Profils 2 liegt der Kern der vorliegenden Erfindung:

Da das Profil 2 im rechten Winkel auf die angetriebenen Käfigstäbe zu liegen kommt, werden die Reibungskräfte entlang der ganzen Länge der Berührungslinie wirksam und das Profil bzw. Band wird optimal transportiert. Dieser Antrieb über die Vielzahl an angetriebenen Käfigstangen reicht aus, um das Profil zu verbiegen, die Ränder zusammenzufügen und das gebildete Rohr nach dem Austritt aus der Wickelvorrichtung in eine Ausnehmung (zu sanierende Rohrleitung) vorzutreiben.

Durch die relative Länge der Käfigstäbe (ein Mehrfaches der Profilbreite) wird auch das gebildete Rohr nicht nur sehr genau kalibriert, sondern auch noch zusätzlich durch dessen Anliegen an die Stäbe in Drehung versetzt und vorgetrieben.

Durch die zur Käfigachse schräggestellten angetriebenen Stäbe 8 liegen diese, falls sie zylindrisch ausgebildet sind, nicht über ihre ganze Länge auf dem durch den Käfig gebildeten Zylinder. Für kleine Profilbreiten ist dies in der Praxis unbedeutend. Dieser Effekt könnte allerdings durch die Auswahl einer im Längsschnitt gesehen konkaven Form der Stäbe ausgeglichen werden. Es ist somit möglich, die angetriebenen Käfigstäbe zylindrisch, konkav oder konvex auszugestalten.

Die Stäbe bestehen üblicherweise aus Stahl, mit einer glatten oder rauhen Oberfläche (z.B. gerillt). Sie können mit einem reibungserhöhenden Ueberzug (Kunststoff) versehen sein.

## Patentansprüche

1. Vorrichtung zur Bildung von Rohren durch schraubenlinienförmiges Wickeln eines Bandes, mit einem stationären zylindrischen Wickelkäfig (3) aus einer Mehrzahl zwischen zwei parallelen ringförmigen Trägerplatten (5,6) angeordneten, den zylindrischen Mantel des Käfigs bildenden stangenförmigen Elementen (7,8), von denen wenigstens ein Teil um ihre jeweilige Längsachse drehend angetrieben sind, um ein mittels einer Führungseinrichtung (1) auf die Käfiginnenseite geführtes Band (2) auf dem gewünschten Durchmesser abzustützen und in Wickelrichtung vorzutreiben und die aneinanderstossenden Bandränder zusammenzufügen, wobei die angetriebenen Käfigstangen (8) um den Steigungswinkel des schraubenlinienförmig aufzuwickelnden Bandes (2) zwischen den ringförmigen Trägerplatten (5,6) schräggestellt angeordnet sind und Mittel (1) vorgesehen sind, um das zu wickelnde Band senkrecht zur Längsachse der angetriebenen Käfigstangen (8) an letztere anzulegen, dadurch gekennzeichnet, dass neben den schräggestellten angetriebenen Käfigstangen (8) noch fixe, parallel zur Käfigachse verlaufende Stangen (7) angeordnet sind, welche das Grundgerüst des Käfigs (3) bilden und dass die Käfigstangen (8) im Längsschnitt gesehen eine konkave Form aufweisen, damit die schräggestellten Käfigstangen (8) mit der reibungswirksamen Oberflächenlinie über deren ganze Länge auf einer dem Aussendurchmesser des gewickelten Rohres entsprechenden Zylinderfläche liegen.

2. Vorrichtung nach Anspruch 1, dadurch gekennzeichnet, dass die Führungseinrichtung (1) das Band (2) tangential auf die Käfiginnenseite zuführt und dass diese Einrichtung bezüglich der Käfiglängsachse um einen beliebig einstellbaren Winkel verschwenkbar am Gestell der Vorrichtung angeordnet ist, um das Band (2) senkrecht zur Längsachse der schräggestellten Käfigstangen (8) an letztere anzulegen.

3. Vorrichtung nach einem der Ansprüche 1 oder 2, dadurch gekennzeichnet, dass am Eintritt des Bandes (2) in den Käfig (3) eine ins Käfiginnere ragende Bandverschluss-Rolle (12) angeordnet und dazu vorgesehen ist, sich von der Innenseite her im Bereich der Bandverschlussstelle gegen sich überlappende Bandränder anzulegen und aneinanderstossende Bandränder zusammenzufügen.

4. Vorrichtung nach Anspruch 3, dadurch gekennzeichnet, dass die Bandverschluss-Rolle (12) wenigstens im Bereich der Verschlussstelle gegen das Band (2) anlegbar ist und sich über etwas mehr als die Breite des zugeführten Bandes (2) erstreckt.

5. Vorrichtung nach Anspruch 3 oder 4, dadurch gekennzeichnet, dass der Bandverschluss-Rolle (12) eine aussen auf dem Käfigmantel angeordnete Verschluss-Gegenrolle (13) zugeordnet ist, um zusammen mit der Verschlussrolle (12) einen Zusammenfügungsspalt für miteinander zu verbindende Bandränder zu bilden.

6. Vorrichtung nach Anspruch 5, dadurch gekennzeichnet, dass die Verschluss-Gegenrolle (13) durch eines der den Käfigmantel bildenden stabförmigen Elemente (7;8) gebildet ist.

7. Vorrichtung nach einem der Ansprüche 3-6, dadurch gekennzeichnet, dass die Bandverschluss-Rolle (12) und/oder die Verschluss-Gegenrolle (13) in Durchlaufrichtung des Bandes (2) angetrieben ist.

8. Vorrichtung nach Anspruch 1, dadurch gekennzeichnet, dass die Oberfläche der walzenförmigen Käfigstangen (8) glatt oder rauh, z.B. gerippt ausgebildet ist.

9. Vorrichtung nach einem der Ansprüche 1-8, dadurch gekennzeichnet, dass die angetriebenen Käfigstangen (8) aus Stahl, gegebenenfalls mit einem Ueberzug aus Kunststoff oder einem Elastomeren, bestehen.

10. Vorrichtung nach einem der Ansprüche 1-9, dadurch gekennzeichnet, dass eine zusätzliche Antriebsvorrichtung vorgesehen ist, um das Band bis zur Anlage an die Käfigstangen in den Käfig zu stossen.

## Claims

1. Device for forming tubes by helically winding a strip, with a stationary cylindrical winding cage (3) consisting of a plurality of rod-shaped elements (7, 8) which are disposed between two parallel annular bearing plates (5, 6), form the cylindrical shell of the cage and at least some of which are driven so as to rotate about their respective longitudinal axis in order to support a strip (2), which is guided by means of a guide apparatus (1) to the inside of the cage, at the desired diameter and advance it in the winding direction and to join the abutting strip edges, wherein the driven cage rods (8) are disposed at an inclination about the helix angle of the strip (2) to be helically wound between the annular bearing plates (5, 6), and means (1) are provided to apply the strip to be wound to the driven cage rods (8) perpendicularly to the longitudinal axis of the latter, characterised in that fixed rods (7), which extend parallel to the cage axis, are also disposed next to the inclined driven cage rods (8), which fixed rods form the basic framework of the cage (3), and that the cage rods (8) have a concave shape when viewed in a longitudinal section, so that the inclined cage rods (8) lie by way of the frictionally active surface line over their entire length on a cylinder surface corresponding to the outside diameter of the wound tube.

2. Device according to claim 1, characterised in that the guide apparatus (1) delivers the strip (2) tangentially to the inside of the cage, and that this apparatus is disposed on the framework of the device such that it can pivot with respect to the longitudinal cage axis through an angle which can be set as desired in order to apply the strip (2) to the inclined cage rods (8) perpendicularly to the longitudinal axis of the latter.

3. Device according to one of claims 1 and 2, characterised in that a strip closing roller (12), which projects into the cage interior, is disposed at the point at which the strip (2) enters the cage (3) and is provided to be applied from the inside in the region of the strip closure point to overlapping strip edges and to join abutting strip edges.

4. Device according to claim 3, characterised in that the strip closing roller (12) can be applied to the strip (2) at least in the region of the closure point and extends over slightly more than the width of the delivered strip (2).

5. Device according to claim 3 or 4, characterised in that a closing counter-roller (13), which is disposed on the outside of the cage shell, is associated with the strip closing roller (12) in order to form with the closing roller (12) a joining gap for strip edges which are to be connected together.

6. Device according to claim 5, characterised in that the closing counter-roller (13) is formed by one of the rod-shaped elements (7; 8) forming the cage shell.

7. Device according to one of claims 3 - 6, characterised in that the strip closing roller (12) and/or the closing counter-roller (13) is/are driven in the direction in which the strip (2) passes.

8. Device according to claim 1, characterised in that the surface of the roller-shaped cage rods (8) is smooth or rough, e.g. ribbed.

9. Device according to one of claims 1 - 8, characterised in that the driven cage rods (8) consist of steel, possibly with a coating of plastic or an elastomer.

10. Device according to one of claims 1 - 9, characterised in that an additional drive device is provided to push the strip into contact with the cage rods.

## Revendications

1. Dispositif pour la constitution de tubes par enroulement hélicoïdal d'une bande, comprenant une cage d'enroulement stationnaire (3) cylindrique et constituée de plusieurs éléments (7, 8) en forme de tige, disposés entre deux plaques de support annulaires parallèles (5, 6) et formant l'enveloppe cylindrique de la cage, une partie au moins des tiges étant entraînée en rotation autour de leur axe longitudinal respectif, afin de soutenir une bande (2) introduite à l'intérieur de la cage au moyen d'un dispositif de guidage (1), de manière à définir le diamètre souhaité, de faire avancer la bande dans le sens de l'enroulement et d'assembler les bords contigus de le bande l'un à l'autre, les tiges entraînées (8) de la cage étant inclinées, entre les plaques de support annulaires (5, 6), selon l'angle d'hélice de la bande (2) à enrouler en forme d'hélice, et des moyens (1) étant prévus pour appliquer la bande à enrouler contre les tiges entraînées (8) de la cage, de façon perpendiculaire à l'axe longitudinal de celles-ci, caractérisé en ce que, outre les tiges entraînées inclinées (8) de la cage, des tiges fixes (7) s'étendant parallèlement à l'axe de la cage sont prévues, qui constituent l'ossature de le cage (3), et en ce que les tiges (8) de la cage, vues en coupe longitudinale, présentent une forme concave, afin que les tiges inclinées (8) de la cage s'inscrivent, sur toute la longueur de leur ligne génératrice active et de frottement, sur une surface cylindrique correspondant au diamètre extérieur du tube roulé.

2. Dispositif selon la revendication 1, caractérisé en ce que le dispositif de guidage (1) guide la bande (2) tangentiellement dans l'espace intérieur de la cage, et en ce que ce dispositif est installé sur un bâti du dispositif, de façon à pouvoir s'incliner selon un angle réglable quelconque par rapport à l'axe longitudinal de la cage, de manière à appliquer la bande (2) sur les tiges inclinées (8) de la cage, perpendiculairement à l'axe longitudinal de celles-ci.

3. Dispositif selon l'une des revendications 1 ou 2, caractérisé en ce qu'un rouleau (12) de fermeture de la bande est disposé à l'intérieur de la cage à hauteur de l'entrée de la bande (2) dans la cage (3) et est prévu pour se plaquer contre les bords chevauchés de la bande, depuis le côté intérieur, au niveau du point de jonction des bandes, et pour assembler les bords contigus de la bande l'un à l'autre.

4. Dispositif selon la revendication 3, caractérisé en ce que le rouleau (12) de fermeture de la bande est agencé de manière à pouvoir être amené en appui sur la bande (2) au moins au niveau du point de jonction, et s'étend sur un peu plus de la largeur de la bande introduite (2).

5. Dispositif selon la revendication 3 ou 4, caractérisé en ce qu'un contre-rouleau (13) de fermeture, disposé à l'extérieur sur l'enveloppe de la cage, est associé au rouleau (12) de fermeture de bande, de manière à constituer, en conjonction avec le rouleau (12) de fermeture, une fente d'assemblage pour les bords à assembler de la bande.

6. Dispositif selon la revendication 5, caractérisé en ce que le contre-rouleau (13) de fermeture est constitué par l'un des éléments (7; 8) en forme de tige, qui forment l'enveloppe de la cage.

7. Dispositif selon l'une des revendications 3 à 6, caractérisé en ce que le rouleau (12) de fermeture de bande et/ou le contre-rouleau (13) de fermeture est/sont entraîné(s) dans le sens du passage de la bande (2).

8. Dispositif selon la revendication 1, caractérisé en ce que la surface des tiges (8) de la cage, en forme de cylindres, est configurée de façon soit lisse, soit rugueuse, par exemple nervurée.

9. Dispositif selon l'une des revendications 1 à 8, caractérisé en ce que les tiges entraînées (8) de la cage sont réalisées en acier, recouvert, le cas échéant, d'un revêtement en matière plastique ou d'un élastomère.

10. Dispositif selon l'une des revendications 1 à 9, caractérisé en ce qu'un dispositif supplémentaire d'entraînement est prévu pour pousser la bande dans la cage au contact des tiges de la cage.
